# EUROPÄISCHE PATENTSCHRIFT

(11) **EP 0 846 726 B1**
(45) Veröffentlichungstag und Bekanntmachung des Hinweises auf die Patenterteilung: **24.10.2001**
(21) Anmeldenummer: 97120671.9
(22) Anmeldetag: 26.11.1997
(51) Int. Cl.: C08L 33/10

(54) **Methacryl-Plastisol**
Methacryl-Plastisol
Plastisol de méthacrylate

(30) Priorität: 07.12.1996 DE 19650939
(43) Veröffentlichungstag der Anmeldung: 10.06.1998
(73) Patentinhaber: Röhm GmbH & Co. KG, 64293 Darmstadt (DE)
(72) Erfinder: Elser, Wilhelm, 88499 Riedlingen/Do. (DE); Schmitt, Günther, Dr., 64291 Darmstadt (DE); Rausch, Ursula, 64347 Grieshein (DE); Mager, Theodor, 64295 Darmstadt (DE)

(56) Entgegenhaltungen:
- Keine einschlägigen Dokumente gefunden

## Beschreibung

### Gebiet der Erfindung

Die Erfindung betrifft Plastisole auf der Grundlage von durch Weichmacherzusatz weichgemachten PMMA-Polymermassen, die zusätzlich noch eine vernetzende Komponente enthalten.

### Stand der Technik:

Plastisole, d. h. zweiphasige Systeme bestehend aus Kunststoff- oder Kunstharzteilchen und einem geeigneten Weichmacher oder einer geeigneten Weichmachermischung, sind theoretisch aus den verschiedensten Kunststoffen herstellbar, die technisch wichtigsten Anwendungen blieben aber bisher auf wenige Polymersysteme beschränkt. Copolymerisäte aus Polyvinylchlorid und weiteren, vinylisch ungesättigten Monomeren sind bekannt und finden weite Anwendung. Nachteilig ist ihr Gehalt an Chlor, der unter bestimmten Bedingungen korrodierend wirken kann. Diese Plastisole sind auch unter den Bezeichnungen PVC-Plasten, Plastisole, Organosole oder Plastigele bekannt. (vgl. auch Ullmann's Encyclopedia of Industrial Chemistry, 5th Ed. Vol. A21, Seiten 734 - 737, VCH 1992; Becker-Braun, Kunststoff-Handbuch, 2. Auflage, Bd. 2/2, Seiten 1077-1090, C. Hanser 1986. H. F Mark et al. Ed. Encyclopedia of Polymer Science & Engineering, 2nd Ed. Supplem. Vol. Seiten 568 - 643, Wiley-Interscience 1989 und Saechtling, Kunststoff Taschenbuch, Carl Hanser Verlag, München, 26. Ausgabe,(1995) Seiten 406 ff.).

Copolymerisate auf der Basis von Methylmethacrylat und Butylmethacrylat, sogenannte PAMA-Plastisole, werden mit großem Erfolg für Plastisole im Autobereich eingesetzt. Die Plastisole werden als Klebeplastisole, Dichtungsmassen, Schweißpasten und Unterbodenschutzmassen sowie als Fußbodenbeläge eingesetzt. Aber auch Plastisole auf Acrylatbasis stehen der Praxis schon seit einiger Zeit zur Verfügung (vgl. DE-PS 934 498, FR-A 2,291,248). Der letztgenannte Stand der Technik baut auf der Erkenntnis auf, daß es zur Herstellung technisch akzeptabler PAMA-Plastisole der Abstimmung von Glastemperatur Tg, Teilchengröße und Zusammensetzung der Polymerpartikel einerseits und speziellen Weichmachern andererseits bedarf.

Dabei wird die Regel aufgestellt, daß die durchschnittliche Korngröße des Polymerisats umso größer sein solle, je niedriger dessen Glastemperatur Tg liege. Die durchschnittliche Korngröße des eingesetzten Polymeren muß gemäß der FR-A -2,291,248 zwischen 0,1 µm und 500 µm, und soll vorzugsweise zwischen 0,3 und 20 µm liegen. Als geeignete Primärteilchen werden sowohl suspensionspolymerisierte als auch emulsionspolymerisierte Acrylpolymere angegeben.

Die DE-A 25 43 542 beschreibt ebenfalls PAMA-Plastisole, bevorzugt mit basischen Comonomeren im Teilchengrößenbereich von 0,1 bis 200 µm, die vorzugsweise als Emulsionspolymerisate gewonnen werden. Teilchen von 0,1 bis 20 µm, insbesondere bis 10 µm, sind besonders bevorzugt, lassen sich aber nach dieser Druckschrift nur per Emulsionspolymerisation erzeugen. Eine weitere Modifikation der PAMA-Plastisole wird in DE-A 27 72 752 und 29 49 954 vorgeschlagen. Hier handelt es sich um Kern-Schalepolymerisate mit einem weichmacherverträglichen Kern und einer schlechter weichmachenden verträglichen Schale. In der US-A 4,558,084 wird ein Plastisol auf der Basis eines Copolymerisats aus Methylmethacrylat und Itaconsäure bzw. Itaconsäureanhydrid beschrieben, dem besonders gute Haftung auf elektrophoretisch vorbehandelten Metalloberflächen attestiert wird. In jüngerer Zeit sind Bodenbeläge auf Basis von PAMA-Plastisolen vorgeschlagen worden, bei denen ein reines Polymethylmethacrylat (PMMA) als Matrixmaterial zur Anwendung kommt, das teils in Form von Emulsionspolymerisat teils in Form von Suspensionspolymerisat eingesetzt wird (DE-A 39 03 669).

Wie in der EP-A 477 708 gezeigt wurde, kann durch gleichzeitige Verwendung von sprühgetrockneten Polymerdispersionen und in Suspensionspolymerisation gewonnenem Perlpolymerisat, von denen mindestens eines ein Methylmethacrylat-Copolymerisat darstellt, ein Plastisol mit verbesserter Produktqualität und mit großer Anwendungsbreite gewonnen werden.

Weitere Arbeiten auf dem PAMA-Plastisolgebiet dienten der Verbesserung der Haftfestigkeit insbesondere auf metallischen Untergründen, beispielsweise durch Mitverwendung von 2,5 - 10 Gew.-% Polyamidharzen (Polyaminoamiden) (vgl. EP-A 533 026). Die EP-A 121.759 empfiehlt ebenfalls Polyamidharze als Schutzkolloide zur Verbesserung der Lagerstabilität von Plastisolen. Weitere Druckschriften zielen auf die Verbesserung der Hafteigenschaften, beispielsweise durch Einbau von unter anderem. Glycidil(meth)acrylat in das PAMA-Polymer (US-PS 5,120,795) oder auf die Verbesserung der Weichmacherverträglichkeit durch Einbau von Isobutylmethacrylat als Comonomer (EP-A 477 708; EP-A 539.031) ab. Die DE-OS 24.54.235 (Teroson GmbH) beschreibt unvernetzte Plastisole aus Methylmethacrylat und Butylmethacrylat zur Verwendung als Unterbodenschutz im Automobilbau. Die DE-OS 25.43.542 (Röhm GmbH) beschreibt ein unvernetztes Copolymer aus Methylmethacrylat und Butylmethacrylat sowie Vinylimidazol als Haftungsvermittler. Als Füllmittel dient Kreide, das Plastisol wird zu Beschichtung von Metallen verwendet. Die DE-OS 28.12.016 (du Pont) beschreibt nichtwässrige, unvernetzte Plastisole aus Methylmethacrylat und Methacrylsäure. Nach der Gelierung erhält man einen klaren Film. Die DE-OS 27.22.752 (Röhm GmbH) beschreibt ein Plastisol mit einer Kern-Schale-Struktur. Der Kern besteht aus einem Copolymer aus Methylmethacrylat, Butylacrylat und Butylmethacrylat, die Schale besteht aus überwiegend Methylmethacrylat. Die DE-OS 28.812.014 (du Pont) beschreibt ein lichtempfindliches Plastisol aus Methylmethacrylat und Methacrylsäure. Die DE-OS 29.101.53 (Bayer AG) beschreibt einen vernetzten AcrylatGummi, der in eine Dispersion eingearbeitet wird. Die DE-OS 39.00.933 (BASF AG) beschreibt Plastisole aus Methylmethacrylat, Alkylmethacrylat, ungesättigten Estern von Mono- oder Dicarbonsäuren, Glycidilmethacrylat und Monomeren, die basische Stickstoffgruppen oder Hydroxigruppen enthalten. Die DE-OS 40.300.80 beschreibt eine Mischung aus einer sprühgetrockneten Dispersion und einer sprühgetrockneten Suspension aus Methylmethacrylat und Alkylmethacrylaten einerseits und Butylmethacrylat und Methylmethacrylat andererseits. Ein haftungsvermittelndes Monomer, beispielsweise Vinylimidazol, kann optional zugegeben werden. EP 544 201 (Nippon Zeon Co. Ltd) beschreibt eine Plastisol-Mischung aus Alkylmethacrylaten und Dienen, wie beispielsweise Butadien und Isopren. Als optionales Vernetzungsmittel dient Schwefel oder ZnO. Die Vernetzung erfolgt über die Carboxylgruppen.

Aus DE 39 03 670 (Pegulan AG) sind Bodenbeläge bekannt, die aus PMMA und Benzyloctylphtalat als Weichmacher bestehen.
Die Plastisol-Mischung wird auf 120 °C erhitzt und sofort zu dem Bodenbelag weiterverarbeitet. Aussagen zur Stabilisierung des Plastisols finden sich nicht.

### Nachteile des Standes der Technik:

Von Nachteil ist es hierbei, daß eine große Anzahl technisch wichtiger und gebräuchlicher Weichmacher nicht bei PMMA-Plastisolen eingesetzt werden kann, da die Stabilität der damit hergestellten Plastisole nicht ausreichend ist.
Relevanter Parameter ist hierbei der Viskosiätsanstieg der Plastisole, der eine Verarbeitung der Produkte erschwert.

### Aufgabenstellung:

Aufgabe der vorliegenden Erfindung ist es, chlorfreie Plastisole mit guten mechanischen Eigenschaften und einem weiten Verarbeitungsspielraum bereitzustellen. Angestrebt wird eine konstante Viskosität über den Verarbeitungszeitraum. Weiter soll verhindert werden, daß der zugesetzte Weichmacher ausschwitzt. Dieses Ausschwitzen führt zu unschönen Farbveränderungen an der Oberfläche der Plastisole und beeinträchtigt die Gebrauchseigenschaften.

### Lösung der Aufgabe:

Gelöst wird die Aufgabe durch ein Copolymerisat, bestehend aus
(1) 39 - 99 Gew.-% an Methacrylsäuremethylester und
(2) 60 - 0 Gew.-% an Estern der Methacrylsäure oder der Acrylsäure mit gesättigten, aliphatischen Alkoholen, wobei die Alkohole eine Kettenlänge von 2 - 6 Kohlenstoffatomen aufweisen können, die Kette kann auch verzweigt sein, dabei sind Butylmethacrylat und Isobutylmethacrylat besonders bevorzugt,
(3) 0,05 - 1 Gew.-%, vorzugsweise 0,1-1 Gew.-% eines Vernetzers oder eines Vernetzergemisches sowie
(4) 50 - 200 Gew.-%, bezogen auf die Gesamtmenge/Summe (1) - (3) Weichmacher.

Als Vernetzer können folgende Stoffe eingesetzt werden:
- Triallylcyanurat
- Trimethylolpropantrimethacrylat
- Ethylenglycoldimethacrylat
- 1,4-Butandioldimethacrylat
- Pentaerythrittriallylether.

Es können auch Gemische der vorstehend genannten Stoffe eingesetzt werden.

Bei der Verwendung der Ester der Acrylsäure sollte der Anteil der Acrylsäureester so eingestellt werden, daß die Einfriertemperatur nicht unter die praktisch sinnvolle Grenze von Tg von 60 - 65 °C fällt.

Als Weichmacher können die in der PVC-Technologie verwendeten Weichmacher eingesetzt werden, wie beispielsweise
Phthalat-Weichmacher, wie beispielsweise Dioctylphthalat, Di-isoheptylphthalat, Di-2-ethylhexlphthalat, Di-iso-octylphthalat oder Di-isononylphthalat,
Ester aliphatischer Dicarbonsäuren, wie beispielsweise Adipin-, Azelain- und Sebacinsäurester,
Phosphorsäureester, wie beispielsweise Trikresylphosphat oder Tri-2-ethylhexylphosphat oder Diphenylisodecylphosphat,
Alkylsulfonsäureester des Phenols,
Zitronensäureester, wie beispielsweise Acetyl-tributylcitrat oder Tributylcitrat,
Trimellitate, wie beispielsweise Tri-2-ethylhexyltrimellitat oder Tri-iso-octyltrimellitat,
epoxidierte Produkte, wie beispielsweise epoxidierte Fettsäureester, epoxidiertes Leinöl oder epoxidiertes Sojaöl,
Polyester-Weichmacher, wie beispielsweise Polyester aus (Propan-, Butan-, Pentan- und Hexan-)Diolen mit Dicarbonsäuren

Die Weichmacher können auch als Gemische eingesetzt werden.

Primär kommen Weichmacher mit geringerer Polarität infrage, wie z.B. die Alkylester der Phthalsäure, der Adipinsäure, der Sebacinsäure, chlorierte Paraffine, Trialkylphosphate, aliphatische oder araliphatische Polyester neben Weichmachern mit mittlerer Polarität wie höhere Polyglykole, Phthalsäurepolyester oder Adipinsäurepolyester u.v.a.

Als ein Hinweis kann gelten, daß in der Regel auch alle für PVC geeigneten Weichmacher eingesetzt werden können, wobei die Gruppe der Phthalat-Weichmacher wegen ihrer herausragenden technischen Bedeutung besonders hervorzuheben ist.

Eine ausführliche Beschreibung geeigneter Weichmacher findet sich im Kunststoff-Handbuch, Herausg. H. K. Felger, Bd. 1/1 C, Hanser Verlag 1985 sowie in H. F. Mark et al. Encyclopedia of Polymer Science and Engineering, Supplemental Volume, pg. 568 - 647, J. Wiley 1989. Eine Auswahl geeigneter Weichmacher kann auch der DE-C 25 43 542 entnommen werden.

Besonders erwähnt seien das Diisodecylphthalat, Benzyloktylphthalat und Dioctylphthalat. Wie bereits vorstehend ausgeführt wurde, kommen die Weichmacher in Anteilen von 40 bis 200 Gew.-Teilen auf 100 Gew.-Teile der Polymeren P) zur Anwendung.

### Herstellung der erfindungsgemäßen Produkte:

Es handelt sich um sprühgetrocknete Emulsionspolymerisate. Die Herstellung der sprühgetrockneten Emulsionspolymerisate erfolgt gemäß der in EP 477 708 und EP 154 189 beschriebenen beispielhaften Herstellungsvorschriften.

Polymerisiert wird in einem mit einer Wasser-Umlaufheizung versehenen VA-Kessel bei 80 °C. Die Rührgeschwindigkeit beträgt 45 Umdrehungen/Minute. Emulgiert wird in einem VA-Kessel mit Propellerrührer bei ca. 1300 Umdrehungen/Minute.

Zur Verbesserung spezieller anstrichtechnischer Eigenschaften, wie beispielsweise Haftung, Härte. Beständigkeit gegen Wasser und Salznebel können noch kleine Mengen an Polyaminoamiden und oder verkappten Polyisocyanaten zugesetzt werden.

In kleinen Mengen können im Polymer noch folgende Monomere enthalten sein: ungesättigte Carbonsäuren, wie beispielsweise Methacrylsäure oder Acrylsäure zugesetzt werden, ferner Hydroxyalkylmethacrylate wie beispielsweise Hydroxyethylmethacrylat, ferner Acrylnitril, Vinylimidazol oder 2-Dimethylaminoethylmethacrylat.

Die Plastisole werden je nach Anwendungsgebiet in unpigmentiertem Zustand (z. B. Fußbodenbeläge) oder in pigmentiertem bzw. gefülltem Zustand (z. B. Unterbodenschutzmassen) eingesetzt. Im Falle der pigmentierten bzw. gefüllten Massen beträgt der Anteil an Pigmenten und Füllstoffen im allgemeinen bis zu 400, vorzugsweise bis 200 Gew.-Teile pro 100 Gew.-Teile der Polymermasse. Als Füllstoffe kommen in erster Linie Kreide, daneben Baryt, Kaolin, Siliciumdioxid in verschiedenen Modifikationen, Silikate bzw. Sand, Talk, Tone wie Bentonit, Glaspulver, Aluminiumoxid bzw. hydratisierte Formen, als Pigmente TiO₂, Eisenoxide, Ruß in Frage. Die Füllstoffe bzw. Pigmente werden vorteilhaft in passender Partikelgröße, beispielsweise im Bereich 0,2 bis 30 µm angewendet. (Bestimmung nach Ullmanns Encyclopädie der techn. Chemie, 4. Auflage, Bd. 5, S. 725 - 752;)

Die Korngrößenverteilung kann durch Messung der Lichtextinktion einer durch die Meßzelle eines Meßgeräts ("Kratel Partoskop F" der Kratel GmbH, Göttingen) strömenden Suspension der Teilchen in Wasser bestimmt werden Die Füllstoffe können z.B. gefällt und/oder gemahlen und gegebenenfalls gecoatet sein.

Desweiteren können die Plastisole übliche Zusatzstoffe enthalten, zum Beispiel Dispergierhilfsmittel, Viskositätsregler wie Emulgatoren und Silikone, Stabilisatoren gegen Hitze, Licht und Oxidation. Auch die Herstellung von geschäumten Plastigelen durch Zusatz von Treibmitteln wie z.B. Azoverbindungen ist möglich.

Zur Kennzeichnung der Molekülgröße ist der bei 20 °C in Chloroform bzw. in Nitromethan gemessene nₛₚ/C-Wert (Makromolekulare Chemie 7, S. 294, 1952) geeignet. Die nₛₚ/C-Werte liegen im allgemeinen im Bereich 120-600 ml/g.

### Vorteilhafte Wirkungen

Die erfindungsgemäßen Plastisole sind für sämtliche Anwendungen geeignet, wie sie beispielsweise als Anwendungsbereiche für PVC- und PAMA-Plastisole vorgezeichnet sind.

Besonders hervorgehoben sei die Anwendung als Laufschicht für Bodenbeläge durch Applikation auf einem gegebenen Träger. Weiterhin sind freie transparente Folien, die aus diesen Plastisolen hergestellt werden können, von technischem Interesse. Genannt seien außerdem noch die Anwendungen für Tapeten, Kunststoff-Planen (LKW-Planen), Autohimmel, Armaturenbrett-Verkleidungen u.v.a.m. Von besonderem Gewicht ist der erweiterte Verarbeitungsbereich der Plastisole.

Die folgende Tabelle zeigt die höhere Konstanz der Viskosität der erfindungsgemäßen Copolymerisate nach Lagerung:

| Zusammensetzung des Copolymerisats | Gewichtsverhältnisse der Monomeren | Gewichtsverhältnis Copolymer/Weichmacher | Viskosität in mPas | |
|---|---|---|---|---|
| | | | nach der Herstellung | nach 4 Stunden Lagerung |
| Methylmethacrylat/Butylmethacrylat | 80/20 | 55/45 | 3.520 | 30.475 |
| Methylmethacrylat/Butylmethacrylat/Allylmethacrylat | 79,95/20/0,05 | 55/45 | 4.830 | 19.113 |
| Methylmethacrylat/Butylmethacrylat/Allylmethacrylat | 79,90/20,00/0,1 | 55/45 | 3.113 | 12.363 |
| | 0,15 | 55/45 | 3.142 | 6.038 |
| | 0,2 | 55/45 | 2.851 | 5.324 |
| Methylmethacrylat/Butymethacrylat/Triallylcyanurat | 79,95/20/0,5 | 55/45 | 4.277 | 14.950 |
| Methylmethacrylat/Butylmethacrylat/Triallylcyanurat | 79,90/20/0,1 | 55/45 | 2.880 | 19.263 |

Als Weichmacher wird in allen Beispielen ein Gemisch aus Diphenylisodecylphosphat und Tributylcitrat im Verhältnis von 2 : 1 bis 1 : 2 eingesetzt.

Die Beispiele zeigen deutlich den positiven Effekt der Vernetzerverwendung auf die Lagerstabilität der erfindungsgemäßen Plastisole. Während ein unvernetztes Plastisol einen dramatischen Viskositätsanstieg zeigt, der die weitere Verarbeitbarkeit in Frage stellt, hält sich der Viskositätsanstieg bei den vemetzten Plastisolen in Grenzen. Die Verarbeitbarkeit der so hergestellten Plastisole ist nach 4 Stunden immer noch gut.

Die Viskosität der erfindungsgemäßen Copolymerisate soll nach 4 h im Bereich zwischen 10.000 - 20.000 mPa·s liegen, bevorzugt ist ein Bereich von 15.000-15.000 mPa · s. Ein Ausschwitzen des Weichmachers ist nicht zu erkennen.

## Patentansprüche

1. Plastisol aus einem Copolymerisat bestehend aus
(A)
(1) 39 - 99 Gew.-% an Methylmethacrylat und
(2) 60 - 0 Gew.-% an Estern der Methacrylsäure mit gesättigten, aliphatischen Alkoholen, wobei die Alkohole eine Kettenlänge von 2 - 6 Kohlenstoffatomen aufweisen können,
(3) 0,05-1 Gew.-% an eines Vernetzers oder Vernetzermischung
sowie
(B)
(4) 50 - 200 Gew.-%, bezogen auf die Gesamtmenge (1)-(3) an Weichmacher.

2. Plastisol nach Anspruch 1, **dadurch gekennzeichnet, daß** als Vernetzer im verwendeten Copolymerisat folgende Stoffe eingesetzt werden:
1,4-Butandioldimethacrylat oder Glycoldimethacrylat oder Allyl(meth)acrylat oder Triallylcyanurat oder Trimethylolpropantrimethacrylat oder Pentaerythrittriallylether oder Ethylenglycoldimethacrylat oder Mischungen aus den vorstehend aufgezählten Stoffen.

3. Verwendung der Copolymerisats nach Anspruch 1 zur Herstellung von Fußbodenbelägen

## Claims

1. Plastisol made from a copolymerisate comprising
(A)
(1) 39 - 99 wt.-% methylmethacrylate and
(2) 60 - 0 wt.-% esters of methacrylic acid with saturated, aliphatic alcohols, wherein the alcohols can have a chain length of 2 - 6 carbon atoms,
(3) 0.05 - 1 wt.-% of a crosslinker or crosslinker mixture and
(B) (4) 50 - 200 wt.-% plasticiser, based on the total quantity (1) - (3).

2. Plastisol according to claim 1, **characterised in that** the following materials are used as crosslinkers in the utilised copolymerisate: 1,4-butanedioldimethacrylate or glycoldimethacrylate or allyl(meth)acrylate or triallylcyanurate or trimethylolpropanetrimethacrylate or pentaerythritetriallylether or ethyleneglycoldimethacrylate or mixtures of the materials listed above.

3. Use of the copolymerisate according to claim 1 for the production of floor coverings.

## Revendications

1. Plastisol à base d'un copolymérisat formé de :
A)
(1) 39 à 99 % en poids de méthacrylate de méthyle et
(2) 60 à 0 % en poids d'ester d'acide méthacrylique ou d'acide acrylique avec des alcools saturés aliphatiques pour lesquels les alcools peuvent posséder une longueur de chaîne de 2 à 6 atomes de carbone,
(3) 0,05 à 1 % en poids d'un agent de réticulation ou d'un mélange d'agents de réticulation ainsi que
B) (4) 50 à 200 % en poids rapporté à la quantité totale/somme d'agents plastifiants (1) à (3).

2. Plastisol selon la revendication 1,
**caractérisé en ce que**
comme agent de réticulation dans le copolymérisat utilisé, on met en oeuvre les substances suivantes :
le diméthacrylate de 1.4-butanediol, ou un diméthacrylate de glycol, ou un (méth)acrylate d'allyle ou le cyanurate de triallyle, ou le triméthacrylate de triméthylolpropane ou l'éther de pentaérythrityle et de triallyle ou le diméthacrylate d'éthylèneglycol ou des mélanges à base des substances énumérées précédemment.

3. Utilisation du copolymérisat selon la revendication 1 pour la préparation de revêtements de planchers.
